# EUROPEAN PATENT APPLICATION

(11) **EP 4 810 562 A1**
(43) Date of publication of application: **23.09.2026**
(21) Application number: 24891395.6
(22) Date of filing: 12.11.2024
(51) Int. Cl.: C08L 23/14, C08K 3/013, C08K 5/3435, C08L 23/08

(54) **PROPYLENE RESIN COMPOSITION**

(30) Priority: 14.11.2023 JP 2023193536; 28.06.2024 JP 2024104979
(71) Applicant: SUMITOMO CHEMICAL COMPANY, LIMITED, Tokyo 103-6020 (JP)
(72) Inventor: FUKURODA, Hiroshi, Ichihara-shi, Chiba 299-0195 (JP); KAMEO, Koji, Ichihara-shi, Chiba 299-0195 (JP)
(74) Representative: Global IP Europe Patentanwaltskanzlei
(86) International application number: PCT/JP2024/040093
(87) International publication number: WO 2025/105359

(57) **Abstract**

Provided is a propylene resin composition from which a molded article having a large tensile strain at break can be manufactured. A propylene resin composition contains a propylene-based polymer, a metal deactivator, and a hindered amine-based light stabilizer. A ratio of a weight of the hindered amine-based light stabilizer to a weight of the metal deactivator is 10 or more.

## Description

### TECHNICAL FIELD

The present invention relates to a propylene resin composition and a molded article thereof.

### BACKGROUND ART

A molded article containing (manufactured from) a propylene resin composition is used for an automobile material, a household electric appliance material, a container packaging material, or the like.

### PRIOR ART DOCUMENTS

### PATENT DOCUMENT

Patent Document 1: JP-A-2014-196379

### SUMMARY OF THE INVENTION

### PROBLEMS TO BE SOLVED BY THE INVENTION

In recent years, a molded article used for an automobile material, a household electric appliance material, a container packaging material, or the like is required to have a high tensile strain at break.

Therefore, an object of the present invention is to provide a propylene resin composition from which a molded article having a large tensile strain at break can be manufactured. Another object of the present invention is to provide a molded article having a large tensile strain at break.

### MEANS FOR SOLVING THE PROBLEMS

The present invention relates to, but is not limited to, the following.

### [Invention A1]

A propylene resin composition containing a propylene-based polymer, a metal deactivator, and a hindered amine-based light stabilizer, wherein
a ratio of a weight of the hindered amine-based light stabilizer to a weight of the metal deactivator is 10 or more.

### [Invention A2]

The propylene resin composition according to the invention A1, wherein the ratio of the weight of the hindered amine-based light stabilizer to the weight of the metal deactivator is 50 or less.

### [Invention A3]

The propylene resin composition according to the invention A1 or A2, wherein the propylene-based polymer contains a heterophasic propylene polymer material.

### [Invention A4]

The propylene resin composition according to any one of the inventions A1 to A3, wherein a weight ratio of the metal deactivator is 10 ppm by weight to 1000 ppm by weight with respect to 100 parts by weight of a total weight of the propylene resin composition.

### [Invention A5]

The propylene resin composition according to any one of the inventions A1 to A4, wherein a weight ratio of the hindered amine-based light stabilizer is 200 ppm by weight to 10000 ppm by weight with respect to 100 parts by weight of a total weight of the propylene resin composition.

### [Invention A6]

The propylene resin composition according to any one of the inventions A1 to A5, wherein a weight ratio of the propylene-based polymer is 50 parts by weight or more with respect to 100 parts by weight of a total weight of the propylene resin composition.

### [Invention A7]

The propylene resin composition according to any one of the inventions A1 to A6, wherein a melt flow rate (measured under conditions of a temperature of 230°C and a load of 2.16 kgf) of the propylene resin composition is 0.1 g/10 min or more.

### [Invention A8]

The propylene resin composition according to any one of the inventions A1 to A7, wherein a melt flow rate (measured under conditions of a temperature of 230°C and a load of 2.16 kgf) of the propylene-based polymer is 0.1 g/10 min or more.

### [Invention A9]

The propylene resin composition according to any one of the inventions A1 to A8, further containing an ethylene-α-olefin copolymer.

### [Invention A10]

The propylene resin composition according to the invention A9, wherein a weight ratio of the ethylene-α-olefin copolymer is 1 part by weight to 40 parts by weight with respect to 100 parts by weight of a total weight of the propylene resin composition.

### [Invention A11]

The propylene resin composition according to any one of the inventions A1 to A10, further containing an inorganic filler.

### [Invention A12]

The propylene resin composition according to the invention A11, wherein a weight ratio of the inorganic filler is 1 part by weight to 40 parts by weight with respect to 100 parts by weight of a total weight of the propylene resin composition.

### [Invention A13]

The propylene resin composition according to any one of the inventions A1 to A12, further containing an ethylene-α-olefin copolymer and an inorganic filler.

### [Invention A14]

A molded article containing the propylene resin composition according to any one of the inventions A1 to A13.

Other aspects of the present invention will be described below.

### [Invention B1]

A propylene resin composition containing a propylene-based polymer, a metal deactivator having a triazole skeleton or a triazine skeleton, and a hindered amine-based light stabilizer having a 2,2,6,6-tetramethylpiperidine skeleton, wherein
the propylene-based polymer is a heterophasic propylene polymer material,
a weight ratio of the metal deactivator is 10 ppm by weight to 1000 ppm by weight and a weight ratio of the hindered amine-based light stabilizer is 200 ppm by weight to 10000 ppm by weight, with respect to 100 parts by mass of the propylene polymer, and
a weight ratio of the hindered amine-based light stabilizer to a weight of the metal deactivator is 10 or more.

### [Invention B2]

The propylene resin composition according to the invention B1, wherein the ratio of the weight of the hindered amine-based light stabilizer to the weight of the metal deactivator is 50 or less.

### [Invention B3]

The propylene resin composition according to the invention B1 or B2, wherein a weight ratio of the propylene-based polymer is 50 parts by weight or more with respect to 100 parts by weight of a total weight of the propylene resin composition.

### [Invention B4]

The propylene resin composition according to any one of the inventions B1 to B3, wherein a melt flow rate (measured under conditions of a temperature of 230°C and a load of 2.16 kgf) of the propylene resin composition is 0.1 g/10 min or more.

### [Invention B5]

The propylene resin composition according to any one of the inventions B1 to B4, wherein a melt flow rate (measured under conditions of a temperature of 230°C and a load of 2.16 kgf) of the propylene-based polymer is 0.1 g/10 min or more.

### [Invention B6]

The propylene resin composition according to any one of the inventions B1 to B5, further containing an ethylene-α-olefin copolymer.

### [Invention B7]

The propylene resin composition according to the invention B6, wherein a weight ratio of the ethylene-α-olefin copolymer is 1 part by weight to 40 parts by weight with respect to 100 parts by weight of a total weight of the propylene resin composition.

### [Invention B8]

The propylene resin composition according to any one of the inventions B1 to B7, further containing an inorganic filler.

### [Invention B9]

The propylene resin composition according to the invention B8, wherein a weight ratio of the inorganic filler is 1 part by weight to 40 parts by weight with respect to 100 parts by weight of a total weight of the propylene resin composition.

### [Invention B10]

The propylene resin composition according to any one of the inventions B1 to B9, further containing an ethylene-α-olefin copolymer and an inorganic filler.

### [Invention B11]

A molded article containing the propylene resin composition according to any one of the inventions B1 to B10.

### EFFECT OF THE INVENTION

According to the present invention, it is possible to provide a molded article having a large tensile strain at break and a propylene resin composition as a raw material of the molded article.

### MODE FOR CARRYING OUT THE INVENTION

Hereinafter, an embodiment according to the present invention will be specifically described. The present invention is not limited to the specific embodiment described below.

### Description of terms

In describing an embodiment of the present invention, first, commonly used terms will be described.

In the present specification, "monomer unit" means a monomer-derived constituent unit (residue) contained in a polymer obtained by polymerizing a monomer.

In the present specification, "α-olefin" means an olefin containing a carbon atom chain having three or more carbon atoms with a carbon-carbon double bond on a terminal side (α-position) thereof.

In the present specification, "Intrinsic viscosity (unit: dL/g)" (also referred to as [η]) is a value measured at a temperature of 135°C using tetralin as a solvent by the following method.

Specifically, the intrinsic viscosity can be determined by an "extrapolation method" in which values of reduced viscosity are measured for a plurality of concentrations using an Ubbelohde viscometer, respectively, the values of reduced viscosity are plotted with respect to the concentrations, respectively, and a concentration is extrapolated to zero. For example, the measurement is performed according to a method described in Examples.

In the present specification, "melt flow rate (MFR)" means "melt mass flow rate", and is a melt flow rate measured in accordance with JIS K7210-1: 2014 and K7210-2: 2014 under conditions of a temperature of 230°C and a load of 2.16 kgf.

In the present specification, unless otherwise specified, "%" means % by weight, and "part" means "part by weight".

The description of "lower limit to upper limit" indicating a numerical range indicates "lower limit or more and upper limit or less", and the description of "upper limit to lower limit" indicates "upper limit or less and lower limit or more". That is, these descriptions indicate a numerical range including lower limit and upper limit, but in one aspect, one or both of upper limit and lower limit may be excluded. That is, "lower limit to upper limit" may indicate "more than lower limit and upper limit or less", "lower limit or more and less than upper limit", or "more than lower limit and less than upper limit". Similarly, "xxx or more" may indicate "more than xxx ", and "xxx or less" may indicate "less than xxx".

### Propylene resin composition

A propylene resin composition according to the present invention is a propylene resin composition containing a propylene-based polymer, a metal deactivator, and a hindered amine-based light stabilizer, in which a ratio of a weight of the hindered amine-based light stabilizer to a weight of the metal deactivator is 10 or more. In one embodiment, a weight ratio of the metal deactivator is 10 parts by weight to 1000 ppm by weight with respect to 100 parts by weight of the total weight of the propylene resin composition.

Hereinafter, components that can be contained in the propylene resin composition of the present embodiment will be described.

### Propylene-based polymer (P)

In the present specification, the propylene-based polymer (also referred to as component P) is a polymer containing a propylene unit in an amount of more than 50% by weight with respect to all the constituent units (100% by weight). The content of the propylene unit in the propylene-based polymer is usually 100% by weight or less.

Examples of the propylene-based polymer include: a propylene homopolymer; and a propylene-based copolymer (a copolymer obtained by polymerizing propylene and one or more other monomers copolymerizable with the propylene in combination at any ratio).

### Propylene homopolymer

The propylene homopolymer has an intrinsic viscosity [η] of preferably 0.1 dL/g to 5 dL/g, more preferably 0.5 dL/g to 4 dL/g, still more preferably 0.6 dL/g to 3 dL/g from a viewpoint of improving fluidity of the propylene resin composition when the propylene resin composition is melted and toughness of a molded article obtained by molding the propylene resin composition.

### Propylene-based copolymer

The propylene-based copolymer may be a random copolymer or a block copolymer. Examples of other monomers copolymerizable with propylene include an olefin other than propylene (for example, ethylene and an olefin having 4 or more carbon atoms). The number of carbon atoms of the olefin may be 12 or less.

The olefin having 4 or more carbon atoms may be a linear olefin or a branched olefin. The olefin having 4 or more carbon atoms may be an olefin having a cyclic structure, and may be, for example, an α-olefin having a cyclic structure, such as vinylcyclopropane or vinylcyclobutane.

Examples of the olefin that is copolymerizable with propylene and other than propylene include α-olefins other than propylene (for example, ethylene, 1-butene, 1-pentene, 1-hexene, 4-methyl-1-pentene, 1-octene, and 1-decene). The olefin that is copolymerizable with propylene and other than propylene is preferably ethylene, 1-butene, 1-pentene, 1-hexene, 4-methyl-1-pentene, 1-octene, or 1-decene, and more preferably ethylene, 1-butene, 1-hexene, or 1-octene.

### Propylene-based random copolymer

Examples of the propylene-based random copolymer include a random copolymer containing a propylene unit and an ethylene unit (hereinafter, also referred to as a random polymer (1)), a random copolymer containing a propylene unit and an α-olefin unit having 4 or more carbon atoms (hereinafter, also referred to as a random polymer (2)), and a random copolymer containing a propylene unit, an ethylene unit, and an α-olefin unit having 4 or more carbon atoms (hereinafter, also referred to as a random polymer (3)).

The α-olefin having 4 or more carbon atoms and capable of constituting the propylene-based random copolymer is preferably an α-olefin having 4 to 10 carbon atoms. Examples of the α-olefin having 4 to 10 carbon atoms include 1-butene, 1-pentene, 1-hexene, 4-methyl-1-pentene, 1-octene, and 1-decene, and the α-olefin is preferably 1-butene, 1-hexene, or 1-octene.

Examples of the random copolymer (2) include a propylene-1-butene random copolymer, a propylene-1-hexene random copolymer, a propylene-1-octene random copolymer, and a propylene-1-decene random copolymer.

Examples of the random copolymer (3) include a propylene-ethylene-1-butene copolymer, a propylene-ethylene-1-hexene copolymer, a propylene-ethylene-1-octene copolymer, and a propylene-ethylene-1-decene copolymer.

A content ratio of the ethylene unit in the random copolymer (1) is preferably 0.1% by weight to 40% by weight.

A content ratio of the α-olefin unit having 4 or more carbon atoms in the random copolymer (2) is preferably 0.1% by weight to 40% by weight, more preferably 0.1% by weight to 30% by weight, and still more preferably 2% by weight to 15% by weight.

A total content ratio of the ethylene unit and the α-olefin unit having 4 or more carbon atoms in the random copolymer (3) is preferably 0.1% by weight to 40% by weight, more preferably 0.1% by weight to 30% by weight, and still more preferably 2% by weight to 15% by weight.

A content ratio of the propylene unit in each of the random copolymers (1) to (3) is preferably 60% by weight to 99.9% by weight.

The propylene-based polymer (P) can be manufactured, for example, by the following polymerization method using a polymerization catalyst.

Examples of the polymerization catalyst include: a Ziegler type catalyst system; a Ziegler-Natta type catalyst system; a catalyst system containing a periodic table Group 4 transition metal compound having a cyclopentadienyl ring and an alkylaluminoxane; a catalyst system containing a periodic table Group 4 transition metal compound having a cyclopentadienyl ring, a compound that reacts with the transition metal compound to form an ionic complex, and an organic aluminum compound; and a catalyst system in which a catalyst component (for example, a periodic table Group 4 transition metal compound having a cyclopentadienyl ring, a compound that forms an ionic complex, or an organic aluminum compound) is supported on inorganic particles (for example, silica or clay minerals) and modified. In addition, a prepolymerized catalyst prepared by prepolymerizing a monomer such as ethylene or an α-olefin in the presence of such a catalyst system may be used. Examples of the Ziegler-Natta type catalyst system include a catalyst system using a titanium-containing solid transition metal component and an organometallic component in combination.

Examples of such a catalyst system include catalyst systems described in JP-A-61-218606, JP-A-5-194685, JP-A-7-216017, JP-A-9-316147, and JP-A-10-212319, and examples of a catalyst system used for manufacturing a heterophasic propylene polymer material described later include a catalyst system described in JP-A-2004-182981.

Examples of the polymerization method include bulk polymerization, solution polymerization, and gas phase polymerization. Here, the bulk polymerization refers to a method for performing polymerization using a liquid olefin as a medium at a polymerization temperature. The solution polymerization refers to a method for performing polymerization in an inert hydrocarbon solvent such as propane, butane, isobutane, pentane, hexane, heptane, or octane. The gas phase polymerization refers to a method for polymerizing a monomer in a gas state in a medium which is the monomer in the gas state.

In performing the polymerization method, examples of a polymerization type thereof include a batch type, a continuous type, and a combination thereof. The polymerization type may be a multistage type performed using a plurality of polymerization reaction tanks connected in series.

Various conditions (a polymerization temperature, a polymerization pressure, a monomer concentration, a catalyst putting amount, a polymerization time, and the like) in the polymerization method can be appropriately determined according to an intended propylene-based polymer.

In the manufacture of the propylene-based polymer, by holding the obtained propylene-based polymer at a temperature at which a residual solvent and impurities such as the oligomer can volatilize and which is lower than a temperature at which the propylene-based polymer melts, a treatment of removing a residual solvent contained in the obtained propylene-based polymer, an oligomer having an ultra-low molecular weight by-produced during the manufacture, and the like may be performed. Examples of the method for removing a residual solvent and impurities such as an oligomer include methods described in JP-A-55-75410 and JP-B2-2565753.

The propylene resin composition of the present embodiment may contain two or more types of propylene-based polymers as the propylene-based polymer (P).

When two or more types of propylene-based polymers are contained, examples of a combination of the two or more types of propylene-based polymers include a combination of two or more types of propylene homopolymers having different weight average molecular weights and the like, and a heterophasic propylene polymer material.

Here, the "heterophasic propylene polymer material" means a material containing two or more types of propylene-based polymers, in which the two or more types of propylene-based polymers are incompatible with each other and form different phases.

Examples of the heterophasic propylene polymer material include a material containing a combination of the following polymer (I) and polymer (II).

Here, the polymer (I) is a polymer having a propylene unit in an amount of more than 80% by weight and 100% by weight or less with respect to the amount of all constituent units. The polymer (I) may be a propylene homopolymer or a copolymer of propylene and another monomer. A total content ratio of monomer units other than the propylene unit in the polymer (I) is usually 0% by weight or more and less than 20% by weight, may be 0% by weight, or may be 0.01% by weight or more when the weight of the polymer (I) is 100% by weight. When the polymer (I) is a copolymer, the polymer (I) may be a random copolymer.

Examples of the monomer unit which is other than the propylene unit and may be contained in the polymer (I) include an ethylene unit and an α-olefin unit having 4 or more carbon atoms.

The α-olefin having 4 or more carbon atoms and capable of constituting the polymer (I) is preferably an α-olefin having 4 to 10 carbon atoms, more preferably 1-butene, 1-hexene, or 1-octene, and still more preferably 1-butene.

Examples of the polymer (I) include a propylene homopolymer, a propylene-ethylene copolymer, a propylene-1-butene copolymer, a propylene-1-hexene copolymer, a propylene-1-octene copolymer, a propylene-ethylene-1-butene copolymer, a propylene-ethylene-1-hexene copolymer, and a propylene-ethylene-1-octene copolymer.

Among these polymers, the polymer (I) is preferably a propylene homopolymer, a propylene-ethylene copolymer, a propylene-1-butene copolymer, or a propylene-ethylene-1-butene copolymer, and more preferably a propylene homopolymer from a viewpoint of improving rigidity of a molded article obtained by molding the propylene resin composition.

The polymer (II) is a copolymer of a propylene unit and at least one monomer unit selected from the group consisting of an ethylene unit and an α-olefin unit having 4 or more carbon atoms. The polymer (II) is preferably a polymer having a propylene unit in an amount of more than 0% by weight and 90% by weight or less, and more preferably a polymer having a propylene unit in an amount of more than 0% by weight and 80% by weight or less, with respect to the amount of all constituent units. The polymer (II) may be a random copolymer or a block copolymer.

A total content ratio of the ethylene unit and the α-olefin unit having 4 or more carbon atoms in the polymer (II) is preferably 20% by weight to 80% by weight, and more preferably 20% by weight to 60% by weight when the weight of the polymer (II) is 100% by weight.

The α-olefin having 4 or more carbon atoms and capable of constituting the polymer (II) is preferably an α-olefin having 4 to 10 carbon atoms, and examples thereof include examples similar to the above-described examples of the α-olefin capable of constituting the polymer (I).

Examples of the polymer (II) include a propylene-ethylene copolymer, a propylene-ethylene-1-butene copolymer, a propylene-ethylene-1-hexene copolymer, a propylene-ethylene-1-octene copolymer, a propylene-ethylene-1-decene copolymer, a propylene-1-butene copolymer, a propylene-1-hexene copolymer, a propylene-1-octene copolymer, and a propylene-1-decene copolymer. The polymer (II) is preferably a propylene-ethylene copolymer, a propylene-1-butene copolymer, or a propylene-ethylene-1-butene copolymer, and more preferably a propylene-ethylene copolymer.

A content ratio of the polymer (II) in the heterophasic propylene polymer material is preferably 1% by weight to 50% by weight, more preferably 1% by weight to 45% by weight, still more preferably 5% by weight to 40% by weight, and particularly preferably 7% by weight to 35% by weight when the total weight of the polymer (I) and the polymer (II) is 100% by weight.

Each of the polymer (I) and the polymer (II) may contain one type of polymer, or may contain two or more types of polymers.

Examples of the heterophasic propylene polymer material include a combination of a propylene homopolymer and a (propylene-ethylene) copolymer, a combination of a propylene homopolymer and a (propylene-ethylene-1-butene) copolymer, a combination of a propylene homopolymer and a (propylene-ethylene-1-hexene) copolymer, a combination of a propylene homopolymer and a (propylene-ethylene-1-octene) copolymer, a combination of a propylene homopolymer and a (propylene-1-butene) copolymer, a combination of a propylene homopolymer and a (propylene-1-hexene) copolymer, a combination of a propylene homopolymer and a (propylene-1-octene) copolymer, and a combination of a propylene homopolymer and a (propylene-1-decene) copolymer, in which the polymer (I) is a propylene homopolymer.

The heterophasic propylene polymer material may be a combination in which the polymer (I) is a polymer containing a propylene unit and a monomer unit other than the propylene unit. When the type of the polymer (I) is described first and the type of the polymer (II) is described later, specific examples of such a heterophasic propylene polymer material include a combination of a (propylene-ethylene) copolymer and a (propylene-ethylene) copolymer, a combination of a (propylene-ethylene) copolymer and a (propylene-ethylene-1-butene) copolymer, a combination of a (propylene-ethylene) copolymer and a (propylene-ethylene-1-hexene) copolymer, a combination of a (propylene-ethylene) copolymer and a (propylene-ethylene-1-octene) copolymer, a combination of a (propylene-ethylene) copolymer and a (propylene-ethylene-1-decene) copolymer, a combination of a (propylene-ethylene) copolymer and a (propylene-1-butene) copolymer, a combination of a (propylene-ethylene) copolymer and a (propylene-1-hexene) copolymer, a combination of a (propylene-ethylene) copolymer and a (propylene-1-octene) copolymer, a combination of a (propylene-ethylene) copolymer and a (propylene-1-decene) copolymer, a combination of a (propylene-1-butene) copolymer and a (propylene-ethylene) copolymer, a combination of a (propylene-1-butene) copolymer and a (propylene-ethylene-1-butene) copolymer, a combination of a (propylene-1-butene) copolymer and a (propylene-ethylene-1-hexene) copolymer, a combination of a (propylene-1-butene) copolymer and a (propylene-ethylene-1-octene) copolymer, a combination of a (propylene-1-butene) copolymer and a (propylene-ethylene-1-decene) copolymer, a combination of a (propylene-1-butene) copolymer and a (propylene-1-butene) copolymer, a combination of a (propylene-1-butene) copolymer and a (propylene-1-hexene) copolymer, a combination of a (propylene-1-butene) copolymer and a (propylene-1-octene) copolymer, a combination of a (propylene-1-butene) copolymer and a (propylene-1-decene) copolymer, a combination of a (propylene-1-hexene) copolymer and a (propylene-1-hexene) copolymer, a combination of a (propylene-1-hexene) copolymer and a (propylene-1-octene) copolymer, a combination of a (propylene-1-hexene) copolymer and a (propylene-1-decene) copolymer, a combination of a (propylene-1-octene) copolymer and a (propylene-1-octene) copolymer, and a combination of a (propylene-1-octene) copolymer and a (propylene-1-decene) copolymer.

The heterophasic propylene polymer material that can be contained in the propylene resin composition of the present embodiment is preferably a combination of a propylene homopolymer and a (propylene-ethylene) copolymer, a combination of a propylene homopolymer and a (propylene-ethylene-1-butene) copolymer, a combination of a (propylene-ethylene) copolymer and a (propylene-ethylene) copolymer, a combination of a (propylene-ethylene) copolymer and a (propylene-ethylene-1-butene) copolymer, or a combination of a (propylene-1-butene) copolymer and a (propylene-1-butene) copolymer, and more preferably a combination of a propylene homopolymer and a (propylene-ethylene) copolymer.

The heterophasic propylene polymer material can be manufactured by multistage polymerization including a preceding polymerization step of generating the polymer (I) and a subsequent polymerization step of further generating the polymer (II) in a state where the polymer (I) generated in the preceding step is present. The polymerization can be performed using a catalyst system exemplified as the catalyst system usable for manufacture of the propylene-based polymer.

The propylene-based polymer (P) preferably contains one or more selected from the group consisting of a propylene homopolymer and a heterophasic propylene polymer material, and is more preferably a heterophasic propylene polymer material.

The propylene-based polymer (P) has an isotactic pentad fraction (also referred to as a [mmmm] fraction) of preferably 0.97 or more, more preferably 0.98 or more, as measured by ¹³C-NMR. The closer the isotactic pentad fraction of the propylene-based polymer is to 1, the higher the stereoregularity of a molecular structure of the propylene-based polymer is, and the higher the crystallinity of the propylene-based polymer is. When the propylene-based polymer is a copolymer, the isotactic pentad fraction can be measured for a chain of propylene units in the copolymer.

A melt flow rate (MFR) of the propylene-based polymer (P) measured under conditions of a temperature of 230°C and a load of 2.16 kgf is preferably 0.1 g/10 min or more, more preferably 0.5 g/10 min or more, preferably 500 g/10 min or less, more preferably 400 g/10 min or less, and preferably 0.1 g/10 min to 500 g/10 min from a viewpoint of improving processability in molding of the propylene resin composition.

Note that a intrinsic viscosity of the propylene-based polymer (P) of the present embodiment is usually less than 5 dL/g, 0.1 dL/g or more, preferably 0.5 dL/g or more, more preferably 0.7 dL/g or more and less than 4 dL/g, and still more preferably 0.8 dL/g or more and less than 3 dL/g from a viewpoint of improving fluidity and processability of the propylene resin composition.

In the present embodiment, a polystyrene-equivalent weight average molecular weight of the propylene-based polymer (P) is usually 100000 to 1000000, and preferably 500000 to 1000000 from a viewpoint of improving an appearance and elongation properties of a molded article.

A molecular weight distribution (Mw/Mn) of the propylene-based polymer (P) may be usually 10 or less, and is preferably 3 to 8 from a viewpoint of improving moldability and mechanical characteristics.

In the present specification, Mw represents a weight average molecular weight, Mn represents a number average molecular weight, and a molecular weight distribution can be measured by gel permeation chromatography (GPC) under the following conditions.
Apparatus: HLC-8121 GPC/HT manufactured by Tosoh Corporation
Separation column: three GMHHR-H(S)HT columns manufactured by Tosoh Corporation
Measurement temperature: 140°C
Carrier: ortho-dichlorobenzene
Flow rate: 1.0 mL/min
Sample concentration: about 1 mg/mL
Sample injection amount: 400 µL
Detector: differential refraction
Calibration curve creation method: Standard polystyrene was used for conversion.

When the propylene-based polymer is a heterophasic propylene polymer material substantially containing the polymer (I) and the polymer (II) and formed by multistage polymerization, a part of the polymer (I) prepared by the preceding polymerization is extracted from a polymerization reactor, an intrinsic viscosity (also referred to as [η]I) of the polymer (I) is determined, an intrinsic viscosity (also referred to as [η]Total) of the polymer finally obtained by multistage polymerization is determined, and an intrinsic viscosity (also referred to as [η]II) of the polymer (II) formed by the subsequent polymerization can be calculated using these values of the intrinsic viscosity and content ratios of the polymers. A calculation procedure is as follows. Note that XI and XII can be determined from a mass balance during polymerization. $\left[η\right] II = \left(\left[η\right]Total-\left[η\right]I\times XI\right) / XII$
[η]Total: Intrinsic viscosity (unit: dL/g) of final polymer
[η]I: Intrinsic viscosity (unit: dL/g) of polymer (I)
XI: weight ratio of polymer (I) to final polymer
XII: weight ratio of polymer (II) to final polymer

The intrinsic viscosity [η]I of the polymer (I) is preferably 0.1 dL/g to 5 dL/g, more preferably 0.5 dL/g to 4 dL/g, and still more preferably 0.6 dL/g to 3 dL/g.

The intrinsic viscosity [η]II of the polymer (II) is preferably 1 dL/g to 10 dL/g, more preferably 1.5 dL/g to 9 dL/g, and still more preferably 2 dL/g to 8 dL/g.

A ratio of [η]II to [η]I ([η]II/[η]I) is preferably 1 to 20, and more preferably 1 to 10.

The weight ratio XII of the polymer (II) to the final polymer may be calculated by the following formula using the crystal melting heat amounts of the polymer (I) and the final polymer. $XII = 1 - \left(ΔHf\right) Total / \left(ΔHf\right) I$
(ΔHf)Total: melting heat amount (unit: cal/g) of final polymer (polymer (I) and polymer (II))
(ΔHf)I: melting heat amount (unit: cal/g) of polymer (I)

A molecular weight distribution (Mw/Mn) of the polymer (I) is preferably 1 or more and less than 10, more preferably 2 or more and less than 7, and still more preferably 3 or more and less than 5.

### Metal deactivator

The propylene resin composition of the present invention contains a metal deactivator (also referred to as a component D).

The metal deactivator is a compound having a function of chelating a metal ion and having a function of preventing a progress of thermal oxidation deterioration of a polymer material due to a metal in an environment where the polymer material is in contact with the metal. As the component D, a known metal deactivator can be used. Examples thereof include a benzotriazole derivative, compounds having one or more groups represented by -CO-NH-(for example, an oxalic acid derivative, a salicylic acid derivative, a hydrazide derivative, and a hydroxybenzoic acid anilide derivative), and sulfur-containing phosphites, which are disclosed in "New Development of Polymer Additive" (Nikkan Kogyo Shimbun, Inc., p. 76 to 85) or JP-A-8-302331. These metal deactivators can be used singly or in combination of two or more types thereof. Although being overlapped with the above, other examples include a compound containing a nitrogen-containing heterocyclic ring in a molecule thereof, a compound containing a nitrogen-containing condensed heterocyclic ring in a molecule thereof, a compound containing a phenolic hydroxyl group in a molecule thereof, a compound containing a salicyl group in a molecule thereof, hydrazones and bishydrazones of an aliphatic and aromatic aldehydes, hydrazides of aliphatic and aromatic mono- and di-carboxylic acids, and a bisacylated hydrazine derivative.

A metal deactivator having a triazole skeleton or a triazine skeleton is preferable.

Specific preferable examples of the metal deactivator include an unsubstituted or alkyl-substituted benzotriazole, 2,4,6-triamino-1,3,5-triazine, 3,9-bis[2-(3,5-diamino-2,4,6-triazaphenyl) ethyl]-2,4,8,10-tetraoxaspiro[5.5]undecane, ethylenediamine-tetraacetic acid, alkali metal salts (Li, Na, and K) of ethylenediamine-tetraacetic acid, N,N'-disalicylidene-ethylenediamine, N,N'-disalicylidene-1,2-propylenediamine, N,N''-disalicylidene-N'-methyl-dipropylenetriamine, 3-(N-salicyloyl) amino-1,2,4-triazole (ADK STAB CDA-1M), decamethylenedicarboxylic acid-bis(N'-salicyloylhydrazide), nickel-bis(1-phenyl-3-methyl-4-decanoyl-5-pyrazolate), 2-ethoxy-2'-ethyloxanilide, 5-t-butyl-2-ethoxy-2'-ethyloxanilide, N,N-diethyl-N',N'-diphenyloxamide, N,N'-diethyl-N,N'-diphenyloxamide, oxalic acid-bis(benzylidenehydrazide), thiodipropionic acid-bis(benzylidenehydrazide), isophthalic acid-bis(2-phenoxypropionylhydrazide), bis(salicyloylhydrazine), N-salicylidene-N'-salicyloylhydrazone, 2',3-bis[[3-[3,5-di-t-butyl-4-hydroxyphenyl] propionyl]] propionohydrazide, trimethylphosphate, tris[2-t-butyl-4-thio(2'-methyl-4'-hydroxy-5'-t-butyl) phenyl-5-methyl]-phenyl phosphite, bis[2-t-butyl-4-thio(2'-methyl-4'-hydroxy-5'-t-butylphenyl)-5-methylphenyl]-pentaerythritol-diphosphite, tetrakis[2-t-butyl-4-thio(2'-methyl-4'-hydroxy-5'-t-butylphenyl)-5-methylphenyl]-1,6-hexamethylene-bis(N-hydroxyethyl-N-methylsemicarbazide)-diphosphite, tetrakis[2-t-butyl-4-thio(2'-methyl-4'-hydroxy-5'-t-butylphenyl)-5-methylphenyl]-1,10-decamethylene-di-carboxylic acid-di-hydroxyethylcarbonylhydrazide-diphosphite, tetrakis[2-t-butyl-4-thio(2'-methyl-4'-hydroxy-5'-t-butylphenyl)-5-methylphenyl]-1,10-decamethylene-di-carboxylic acid-di-salicylhydrazide-diphosphite, tetrakis[2-t-butyl-4-thio(2'-methyl-4'-hydroxy -5'-t-butylphenyl)-5-methylphenyl]-di(hydroxyethylcarbonyl) hydrazide-diphosphite, tetrakis[2-t-butyl-4-thio(2'-methyl-4'-hydroxy-5'-t-butylphenyl)-5-methylphenyl]-N,N'-bis(hydroxyethyl) oxamide-diphosphite, 2,2'-oxamide bis[ethyl 3-(3,5-t-butyl-4-hydroxyphenyl) propionate], N'1,N'12-bis(2-hydroxybenzoyl) dodecanedihydrazide, 3-(3,5-di-tert-butyl-4-hydroxyphenyl)-N'-[3-(3,5-di-tert-butyl-4-hydroxyphenyl) propanoyl] propanehydrazide, and melamine.

More preferable examples thereof include 3-(N-salicyloyl) amino-1,2,4-triazole, trimethylphosphate, N'1,N'12-bis(2-hydroxybenzoyl) dodecanedihydrazide, melamine, 3-(3,5-di-tert-butyl-4-hydroxyphenyl)-N'-[3-(3,5-di-tert-butyl-4-hydroxyphenyl) propanoyl] propanehydrazide.

### Hindered amine-based light stabilizer (H)

The propylene resin composition of the present invention contains a hindered amine-based stabilizer (also referred to as a component H).

The hindered amine-based stabilizer is a compound having a 2,2,6,6-tetramethylpiperidine skeleton in a molecule thereof, and is a light stabilizer having a role of trapping radicals generated by light (ultraviolet rays) in an organic material, a polymer material, or the like and preventing the organic material or the polymer material from being deteriorated by decomposition of a hydroperoxide. Examples thereof include a light stabilizer having a low molecular weight or a high molecular weight. The hindered amine-based light stabilizer (H) may be used singly or in combination of two or more types thereof.

The light stabilizer having a low molecular weight is a light stabilizer having a molecular weight of less than 1000, and examples thereof include bis(2,2,6,6-tetramethyl-4-piperidyl) sebacate (trade name: Tinuvin770, molecular weight: 480), bis(N-methyl-2,2,6,6-tetramethyl-4-piperidyl) sebacate (trade name: Tinuvin765, molecular weight: 508), tetrakis(2,2,6,6-tetra-methyl-4-piperidyl)-1,2,3,4-butanetetracarboxylate (trade name: ADK STAB LA-57, molecular weight: 792), tetrakis(1,2,2,6,6-penta-methyl-4-piperidyl)-1,2,3,4-butanetetracarboxylate (trade name: ADK STAB LA-52, molecular weight: 847), bis(2,2,6,6-tetramethyl-1(octyloxy)-4-piperidyl) decanedioate, and a reaction product of 1,1-dimethylethyl hydroperoxide and octane (trade name: TINUVIN123, molecular weight: 737).

The light stabilizer having a high molecular weight is a light stabilizer having a molecular weight of 1000 or more, and examples thereof include a sterically hindered amine oligomer "copolymer formed of N-(2,2,6,6-tetramethyl-4-piperidyl) maleic acid imide and an α-olefin (C20-24)" (trade name: UVINUL [registered trademark] 5050H, molecular weight: 3500), a formaldehyde polycondensate, a reaction product of {2,4,6-trichloro-1,3,5-triazine•[N,N'-bis(2,2,6,6-tetramethylpiperidin-4-yl) hexane-1,6-diyldiamine]•morpholine polymer} and formic acid (trade name: Cyasorb UV-3529, molecular weight: about 1700), a polycondensate of dimethyl succinate and 4-hydroxy-2,2,6,6-tetramethyl-1-piperidine ethanol (trade name: TINUVIN622LD, molecular weight: about 3100 to 4000), a mixture of N,N',N'',N'''-tetrakis-(4,6 bis-(butyl-(N-methyl-2,2,6,6-tetramethylpiperidin-4-yl) amino)-triazin-2-yl)-4,7-diazadecane-1,10-diamine (molecular weight: 2286, 90%) and a polymer of dimethyl succinate and 4-hydroxy-2,2,6,6-tetramethyl-1-piperidine ethanol (molecular weight: about 3100 to 4000) (trade name: CHIMASORB119FL), mixed {1,2,2,6,6-pentamethyl-4-piperidyl/β,β,β',β'-tetramethyl-3,9-[2,4,8,10-tetraoxaspiro(5,5)undecane] dimethyl}-1,2,3,4 butane tetracarboxylate (ADK STAB LA-63, molecular weight: about 2000), poly[{(6-(1,1,3,3-tetramethylbutyl) amino-1,3,5-triazine-2,4-diyl){(2,2,6,6-tetramethyl-4-piperidyl) imino}hexamethylene {(2,2,6,6-tetramethyl-4-piperidyl) imino}} (trade name: CHIMASORB944LD, molecular weight: 2000 to 3100)], and a polycondensate of dibutylamine•1,3,5-triazine•N,N'-bis(2,2,6,6-tetramethyl-4-piperidyl-1,6-hexamethylenediamine and N-(2,2,6,6-tetramethyl-4-piperidyl) butylamine (trade name: CHIMASORB2020FDL, molecular weight: about 2600 to 3400).

### Ethylene-α-olefin copolymer (E)

The propylene resin composition of the present invention can contain an ethylene-α-olefin copolymer (also referred to as a component E).

In the ethylene-α-olefin copolymer (E), the total of a content ratio of a monomer unit derived from ethylene and a content ratio of a monomer unit derived from an α-olefin having 4 or more carbon atoms may be 100% by weight when the total weight of the ethylene-α-olefin copolymer is 100% by weight.

Examples of the α-olefin having 4 or more carbon atoms include an α-olefin having 4 to 12 carbon atoms. Examples of the α-olefin having 4 to 12 carbon atoms include 1-butene, 1-pentene, 1-hexene, 4-methyl-1-pentene, 1-octene, and 1-decene. Among these α-olefins, 1-butene, 1-hexene, and 1-octene are preferable as the α-olefin having 4 or more carbon atoms. The α-olefin may be an α-olefin having a cyclic structure, such as vinylcyclopropane or vinylcyclobutane.

Examples of the ethylene-α-olefin copolymer (E) include an ethylene-1-butene copolymer, an ethylene-1-hexene copolymer, an ethylene-1-octene copolymer, an ethylene-1-decene copolymer, an ethylene-(3-methyl-1-butene) copolymer, and a copolymer of ethylene and an α-olefin having a cyclic structure.

In the ethylene-α-olefin copolymer (E), a content ratio of a monomer unit derived from an α-olefin having 4 or more carbon atoms is preferably 1% by weight to 49% by weight, more preferably 5% by weight to 49% by weight, and still more preferably 24% by weight to 49% by weight based on the total weight of the ethylene-α-olefin copolymer (100% by weight).

The ethylene-α-olefin copolymer (E) preferably has an MFR (measured at a temperature of 190°C and load of 2.16 kgf) of 0.1 g/10 min or more and 100 g/10 min or less. The MFR is more preferably 0.5 g/10 min or more and 70 g/10 min or less.

The ethylene-α-olefin copolymer (E) has a density of preferably 0.850 g/cm³ to 0.890 g/cm³, more preferably 0.850 g/cm³ to 0.880 g/cm³, still more preferably 0.855 g/cm³ to 0.870 g/cm³ from a viewpoint of improving impact resistance of a molded article.

The ethylene-α-olefin copolymer (E) can be manufactured by polymerizing ethylene and an α-olefin having 4 or more carbon atoms using a polymerization catalyst.

Examples of the polymerization catalyst for the manufacture include a homogeneous catalyst represented by a metallocene catalyst and a Ziegler-Natta type catalyst.

Examples of the homogeneous catalyst include: a catalyst substantially containing a periodic table Group 4 transition metal compound having a cyclopentadienyl ring and an alkylaluminoxane; a catalyst containing a periodic table Group 4 transition metal compound having a cyclopentadienyl ring, a compound that reacts with the transition metal compound to form an ionic complex, and an organic aluminum compound; and a catalyst in which a catalyst component (a periodic table Group 4 transition metal compound having a cyclopentadienyl ring, a compound that forms an ionic complex, an organic aluminum compound, or the like) is supported on inorganic particles (silica, clay minerals, or the like) and modified.

Examples of the Ziegler-Natta type catalyst include a catalyst obtained by combining a titanium-containing solid transition metal component and an organometallic component.

As the ethylene-α-olefin copolymer (E), a commercially available product may be used. Examples of the commercially available ethylene-α-olefin copolymer (E) include ENGAGE (registered trademark) manufactured by Dow Chemical Japan Co., Ltd., TAFMER (registered trademark) manufactured by Mitsui Chemicals, Inc., NEO-ZEX (registered trademark) and ULTZEX (registered trademark) manufactured by Prime Polymer Co., Ltd., and EXCELLEN FX (registered trademark), SUMIKATHENE (registered trademark), and ESPRENE SPO (registered trademark) manufactured by Sumitomo Chemical Co., Ltd.

### Inorganic filler (F)

The propylene resin composition according to the present embodiment may further contain an inorganic filler (also referred to as a component F) from a viewpoint of improving mechanical properties, dimensional stability, and the like.

Examples of the inorganic filler (F) include (i) a fibrous inorganic filler and (ii) a non-fibrous inorganic filler. In the present embodiment, two or more types of inorganic fillers (F) may be used in combination. Hereinafter, a specific description will be given.

### (i) Fibrous inorganic filler

In the present embodiment, the fibrous inorganic filler preferably has an average fiber diameter of 0.2 µm to 20 µm, an average fiber length of 5 µm to 200 µm, and an aspect ratio of 10 to 30. The fibrous inorganic filler more preferably has an average fiber diameter of 0.3 µm to 10 µm, an average fiber length of 7 µm to 150 µm, and an aspect ratio of 12 to 25 from a viewpoint of improving rigidity of a molded article and improving an appearance of the molded article.

The average fiber diameter and the average fiber length of the fibrous inorganic filler are, for example, average values of fiber diameters and fiber lengths measured by randomly selecting 50 or more fibers from an image of the fibrous inorganic filler obtained by an electron microscope, respectively, and an aspect ratio thereof can be calculated using these average values.

Examples of the fibrous inorganic filler include fibrous magnesium oxysulfate, potassium titanate fibers, magnesium hydroxide fibers, aluminum borate fibers, calcium silicate fibers, calcium carbonate fibers, carbon fibers, glass fibers, and metal fibers. Among these, fibrous magnesium oxysulfate and calcium silicate fibers are preferably used.

The fibrous inorganic filler can be used as it is. The fibrous inorganic filler may be further surface-treated with, for example, a silane coupling agent or a higher fatty acid metal salt for use from a viewpoint of improving interfacial adhesion and further improving dispersibility.

Examples of the higher fatty acid metal salt that can be used for the surface treatment include calcium stearate, magnesium stearate, and zinc stearate.

In the present embodiment, examples of a form of the fibrous inorganic filler include a powdery form, a flaky form, and a granular form. In the present embodiment, the fibrous inorganic filler in any one of the above forms may be used. The fibrous inorganic filler in a granular form is preferably used as the fibrous inorganic filler from a viewpoint of favorable handleability.

### (ii) Non-fibrous inorganic filler

Examples of the non-fibrous inorganic filler include talc, mica, calcium carbonate, barium sulfate, magnesium carbonate, clay, alumina, calcium sulfate, silica sand, carbon black, titanium oxide, magnesium hydroxide, molybdenum, silica earth, sericite, SHIRASU, calcium hydroxide, calcium sulfite, sodium sulfate, bentonite, and graphite. Talc is preferably used from a viewpoint of improving impact strength of a molded article and improving an appearance thereof.

An average particle diameter of the non-fibrous inorganic filler is preferably 15 µm or less, and more preferably 10 µm or less. Here, the average particle diameter of the non-fibrous inorganic filler is determined based on volume-based particle diameter distribution measurement data measured by a laser diffraction method according to a method specified in JIS R1629, and means a particle diameter (50% equivalent particle diameter) when an accumulation of the number of particles from a side having a smaller particle diameter reaches 50% in the particle diameter distribution measurement data. The particle diameter defined in this way is generally referred to as "50% equivalent particle diameter" and is denoted by "D50".

The non-fibrous inorganic filler can be used as it is. The non-fibrous inorganic filler may be surface-treated with a silane coupling agent, a titanium coupling agent, or a surfactant from a viewpoint of improving interfacial adhesion and improving dispersibility.

Examples of the surfactant that can be used for the surface treatment include a higher fatty acid, a higher fatty acid ester, a higher fatty acid amide, and a higher fatty acid salt.

The fibrous inorganic filler may be used as it is, or may be surface-treated with a silane coupling agent or a higher fatty acid metal salt for use from a viewpoint of improving interfacial adhesion and improving dispersibility.

### Other additives (A)

In order to improve properties, for example, in order to improve rigidity, impact resistance, heat aging resistance, or water resistance, and/or in order to increase tensile strain at break, the propylene resin composition of the present embodiment may contain other various additives (also referred to as a component A) as an additional optional component in addition to the above-described components.

Examples of such an additive as an optional component include an antioxidant, a neutralizing agent, an ultraviolet absorber, a lubricant, an antistatic agent, a colorant (for example, an inorganic pigment or an organic pigment), a flame retardant, an elastomer, an antiblocking agent, a processing aid, an organic peroxide, a pigment dispersant, a foaming agent, a foaming nucleating agent, a plasticizer, a crosslinking agent, a crosslinking aid, a brightening agent, an antibacterial agent, a light diffusing agent, and a molecular weight modifier.

The propylene resin composition of the present embodiment may contain one of these additives singly, or may contain two or more of these optional components in combination at any ratio.

Among these, an antioxidant, a neutralizing agent, an ultraviolet absorber, and a colorant are suitably used as the additive (A). Hereinafter, a specific description will be given. Note that the propylene resin composition of the present embodiment is preferably a propylene resin composition further containing, in addition to the above components, one or more selected from the group consisting of an organic peroxide, a neutralizing agent, an antioxidant, an ultraviolet absorber, and a colorant.

Examples of the antioxidant include a phenol-based antioxidant, a phosphorus-based antioxidant, a sulfur-based antioxidant, and a hydroxylamine-based antioxidant, and the antioxidant is preferably a phenol-based antioxidant, a phosphorus-based antioxidant, or a sulfur-based antioxidant.

Examples of the phenol-based antioxidant include 2,6-di-tert-butyl-4-methylphenol, tetrakis[methylene-3(3',5'-di-tert-butyl-4-hydroxyphenyl) propionate] methane (Irganox1010), octadecyl-3-(3,5-di-tert-butyl-4-hydroxyphenyl) propionate (Irganox1076), 3,9-bis[2-{3-(3-tert-butyl-4-hydroxy-5-methylphenyl) propionyloxy}-1,1-dimethylethyl]-2,4,8,10-tetraoxaspiro[5•5]undecane, 1,3,5-tris 2[3(3,5-di-tert-butyl-4-hydroxyphenyl) propionyloxy] ethyl isocyanate, 1,3,5-trimethyl-2,4,6-tris(3,5-di-tert-butyl-4-hydroxybenzyl) benzene, tris(3,5-di-tert-butyl-4-hydroxybenzyl) isocyanurate, 1,3,5-tris(4-tert-butyl-3-hydroxy-2,6-dimethylbenzyl) isocyanurate, pentaerythrityl-tetrakis[3-(3,5-di-tert-butyl-4-hydroxyphenyl) propionate], triethylene glycol-N-bis-3-(3-tert-butyl-5-methyl-4-hydroxyphenyl) propionate, 1,6-hexanediol bis[3-(3,5-di-tert-butyl-4-hydroxyphenyl) propionate], 2,2-thiobis-diethylene bis[3-(3,5-di-tert-butyl-4-hydroxyphenyl) propionate], 2,2'-methylene-bis-(4-methyl-6-tertbutylphenol), 2,2'-methylene-bis-(4-ethyl-6-tertbutylphenol), 2,2'-methylene-bis-(4,6-di-tert-butylphenol), 2,2'-ethylidene-bis-(4,6-di-tert-butylphenol), 2,2'-butylidene-bis-(4-methyl-6-tert-butylphenol), 4,4'-butylidenebis(3-methyl-6-tert-butylphenol), 2-tert-butyl-6-(3-tert-butyl-2-hydroxy-5-methylbenzyl)-4-methylphenyl acrylate, 2,4-di-tert-amyl-6-(1-(3,5-di-tert-amyl-2-hydroxyphenyl) ethyl) phenyl acrylate, and tocopherols. Examples of the tocopherols include vitamin E which is an α-tocopherol. Preferred is 2,6-di-tert-butyl-4-methylphenol, tetrakis[methylene -3(3',5'-di-tert-butyl-4-hydroxyphenyl) propionate] methane (Irganox1010), 2,6-di-tert-butyl-4-methylphenol, octadecyl-3-(3,5-di-tert-butyl-4-hydroxyphenyl) propionate (Irganox1076), 3,9-bis[2-{3-(3-tert-butyl-4-hydroxy-5-methylphenyl) propionyloxy}-1,1-dimethylethyl]-2,4,8,10-tetraoxaspiro[5•5]undecane, tris(3,5-di-tert-butyl-4-hydroxybenzyl) isocyanurate, or vitamin E, more preferred is tetrakis[methylene-3(3',5'-di-tert-butyl-4-hydroxyphenyl) propionate] methane (Irganox1010), octadecyl-3-(3,5-di-tert-butyl-4-hydroxyphenyl) propionate (Irganox1076), or vitamin E.

Examples of the phosphorus-based antioxidant include tris(nonylphenyl) phosphite, tris(2,4-di-tert-butylphenyl) phosphite (Irgafos168), distearyl pentaerythritol diphosphite, bis(2,4-di-tert-butylphenyl) pentaerythritol diphosphite, bis(2,4-di-tert-butyl-6-methylphenyl) pentaerythritol diphosphite, bis(2,6-di-tert-butyl-4-methylphenyl) pentaerythritol diphosphite, bis(2,4-dicumylphenyl) pentaerythritol diphosphite, tetrakis(2,4-di-tert-butylphenyl)-4,4'-diphenylene diphosphonite, 2,2'-methylenebis(4,6-di-tert-butylphenyl) 2-ethylhexyl phosphite, 2,2'-ethylidenebis(4,6-di-tert-butylphenyl) fluorophosphite, bis(2,4-di-tert-butyl-6-methylphenyl) ethyl phosphite, 2-(2,4,6-tri-tert-butylphenyl)-5 ethyl-5 butyl-1,3,2-oxaphosphorinane, 2,2',2''-nitrilo [triethyl-tris(3,3',5,5'-tetra-tert-butyl-1,1'-biphenyl-2,2'-diyl) phosphite, and 2,4,8,10-tetra-tert-butyl-6-[3-(3-methyl-4-hydroxy-5-tert-butylphenyl) propoxy] dibenzo[d,f][1,3,2] dioxaphosphepine, and the phosphorus-based antioxidant is preferably tris(2,4-di-tert-butylphenyl) phosphite (Irgafos168) or 2,4,8,10-tetra-tert-butyl-6-[3-(3-methyl-4-hydroxy-5-tert-butylphenyl) propoxy] dibenzo[d,f][1,3,2] dioxaphosphepine.

Examples of the sulfur-based antioxidant include dilauryl 3,3'-thiodipropionate, tridecyl 3,3'-thiodipropionate, dimyristyl 3,3'-thiodipropionate, distearyl 3,3'-thiodipropionate, lauryl stearyl 3,3'-thiodipropionate, neopentane tetrayl tetrakis(3-lauryl thiopropionate), and bis[2-methyl-4-(3-n-alkyl (C12-C14) thiopropionyloxy)-5-tert-butylphenyl] sulfide, and the sulfur-based antioxidant is preferably dilauryl 3,3'-thiodipropionate, dimyristyl 3,3'-thiodipropionate, or distearyl 3,3'-thiodipropionate.

The hydroxylamine-based compound is a compound represented by the following general formula, and is a compound that suppresses thermal oxidation deterioration of a polymer material by forming nitroxyl radicals in a process of a deterioration reaction of the polymer material by heat and oxygen.

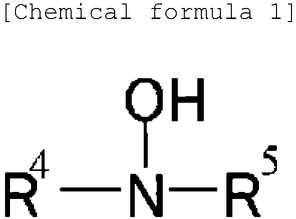

In the hydroxylamine-based compound represented by the above general formula, each of R⁴ and R⁵ is a C12-C30 alkyl group, and R⁴ and R⁵ may be the same as or different from each other. The alkyl group is preferably a linear alkyl group or an alkyl group having a cyclic alkyl group as a substituent, preferably an alkyl group having 12 to 22 carbon atoms, and more preferably a linear saturated alkyl group having 12 to 22 carbon atoms.

Examples of the linear saturated alkyl group include a linear saturated alkyl group such as a tridecyl group, a tetradecyl group, a pentadecyl group, a hexadecyl group, a heptadecyl group, an octadecyl group, a nonadecyl group, an eicosyl group, a heneicosyl group, a docosyl group, a tricosyl group, or a tetracosyl group, and the linear saturated alkyl group is preferably a tetradecyl group, a hexadecyl group, an octadecyl group, an eicosyl group, or a docosyl group.

At least one selected from a phenol-based antioxidant and a phosphorus-based antioxidant is preferably used. The antioxidants may be used singly or in combination of two or more types thereof.

Examples of the neutralizing agent include calcium stearate, hydrotalcite, an oxide of an alkaline earth metal, and a hydroxide of an alkaline earth metal. These neutralizing agents may be used singly or in combination of two or more types thereof.

Examples of the ultraviolet absorber include a benzotriazole-based ultraviolet absorber, a tridiamine-based ultraviolet absorber, an anilide-based ultraviolet absorber, and a benzophenone-based ultraviolet absorber. These neutralizing agents may be used singly or in combination of two or more types thereof.

Examples of the colorant include an inorganic pigment and an organic pigment. Examples of the inorganic pigment include carbon black, iron oxide, titanium oxide, zinc oxide, red iron oxide, cadmium red, cadmium yellow, ultramarine blue, cobalt blue, titanium yellow, white lead, red lead, yellow lead, and Prussian blue. Examples of the organic pigment include quinacridone, polyazo yellow, anthraquinone yellow, polyazo red, azo lake yellow, perylene, phthalocyanine green, phthalocyanine blue, and isoindolinone yellow.

The propylene resin composition may contain other additives such as a resin and a rubber as additives other than the additives described above.

Examples of the other additives (A) include polystyrenes (for example, polystyrene, poly(p-methylstyrene), poly(α-methylstyrene), and an acrylonitrile/styrene copolymer (AS) resin), an acrylonitrile/butadiene/styrene copolymer (ABS) resin, a special acrylic rubber/acrylonitrile/styrene copolymer (AAS) resin, an acrylonitrile/chlorinated polyethylene/styrene copolymer (ACS) resin, polychloroprene, a chlorinated rubber, polyvinyl chloride, polyvinylidene chloride, an acrylic resin, an ethylene/vinyl alcohol copolymer resin, a fluororesin, polyacetal, a grafted polyphenylene ether resin and polyphenylene sulfide resin, polyurethane, polyamide, a polyester resin (for example, polyethylene terephthalate or polybutylene terephthalate), polycarbonate, polysulfone, polyether ether ketone, polyether sulfone, a thermoplastic resin such as an aromatic polyester resin, an epoxy resin, a diallyl phthalate prepolymer, a silicone resin, a silicone rubber, polybutadiene, 1,2-polybutadiene, polyisoprene, a styrene/butadiene copolymer, a butadiene/acrylonitrile copolymer, an epichlorohydrin rubber, an acrylic rubber, a natural rubber, and a PLA resin (polylactic acid) manufactured by polymerizing a plant-derived monomer extracted from a bio raw material.

At least one of various components such as a propylene-based polymer, an ethylene-α-olefin copolymer, and an inorganic filler provided as raw materials for manufacture of the propylene resin composition may be a recycled one.

### Content of each component

In the propylene resin composition of the present invention, the content of each component is not particularly limited as long as a ratio of the weight of the hindered amine-based light stabilizer to the weight of the metal deactivator is 10 or more. The ratio is preferably 13 or more, 15 or more, 18 or more, or 20 or more. An upper limit of the ratio is not particularly limited, but may be, for example, 200 or less, 150 or less, 100 or less, or 70 or less. All combinations of "any one of the above lower limits to any one of the above upper limits" are considered to be specified herein.

When the ratio of the weight of the hindered amine-based light stabilizer to the weight of the metal deactivator is 10 or more, the propylene resin composition of the present invention and a molded article containing (manufactured from) the propylene resin composition have a large tensile strain at break and/or a small mold contamination potential. When the tensile strain at break is large, the molded article is hardly sharply broken, and safety is improved. For example, the tensile strain at break is measured according to a method described in Examples. Due to the small mold contamination potential, the number of times of washing a die can be reduced, and/or a decrease in the number of mold and an increase in a life (service life) of the mold can be achieved, thereby reducing a load on an environment. For example, the mold contamination potential is measured according to a method described in Examples.

A content ratio of the propylene-based polymer (P) to 100 parts by weight of the propylene resin composition of the present invention is preferably 50 parts by weight or more, may be 60 parts by weight or more, may be 70 parts by weight or more, may be 80 parts by weight or more, may be 90 parts by weight or more, may be about 100 parts by weight or less, may be 99 parts by weight or less, may be 50 parts by weight to 95 parts by weight, or may be 60 parts by weight to 95 parts by weight. When the propylene resin composition of the present invention contains a polymer other than the component P, a content ratio of the total weight of the component P and the other polymer to 100 parts by weight of the propylene resin composition may be as described above. The "other polymer" is preferably the ethylene-α-olefin copolymer (E).

When the propylene resin composition of the present invention contains the ethylene-α-olefin copolymer (E), a content ratio of the ethylene-α-olefin copolymer (E) in the propylene resin composition is usually more than 0 parts by weight and 40 parts by weight or less, preferably 1 part by weight or more and 40 parts by weight or less, preferably 5 parts by weight or more and 35 parts by weight or less, and more preferably 5 parts by weight or more and 30 parts by weight or less, when the total amount of the propylene resin composition is 100 parts by weight. In one aspect, a ratio of the weight of the component E to the weight of the component P is more than 0 parts by weight and 40 parts by weight or less, preferably 1 part by weight or more and 40 parts by weight or less, preferably 5 parts by weight or more and 35 parts by weight or less, and more preferably 5 parts by weight or more and 30 parts by weight or less.

The above "more than 0 parts by weight" may be replaced with "0 parts by weight or more". In the present specification, "0 parts by weight or more" used for a content ratio of an optional component means both an aspect in which the component is contained and an aspect in which the component is not contained.

A content ratio of the metal deactivator (D) to 100 parts by weight of the propylene-based polymer (P), 100 parts by weight of the total weight of the polymer components, or 100 parts by weight of the propylene resin composition is preferably 10 ppm by weight to 1000 ppm by weight, more preferably 50 ppm by weight to 800 ppm by weight, and still more preferably 80 ppm by weight to 500 ppm by weight. In order to exhibit a metal deactivating effect, the content of the component D is preferably the lower limit value or more. In addition, in order not to adversely affect a hue of the propylene resin composition, the content of the component D is preferably the above upper limit value or less.

A content ratio of the hindered amine-based light stabilizer (H) to 100 parts by weight of the propylene-based polymer (P), 100 parts by weight of the total weight of the polymer components, or 100 parts by weight of the propylene resin composition is preferably 200 ppm by weight to 10000 ppm by weight, more preferably 500 ppm by weight to 8000 ppm by weight, and still more preferably 1000 ppm by weight to 5000 ppm by weight. In order for the resin composition of the present invention to have sufficient light resistance stability, the content of the component H is preferably the above lower limit value or more. In addition, in order to avoid the component H from bleeding out to a surface of a molded article, causing whitening of the surface, emitting smoke during molding processing, or causing mold contamination, the content of the component H is preferably the above upper limit value or less.

When the polypropylene resin composition of the present invention contains an inorganic filler, a content ratio of the inorganic filler (F) to 100 parts by weight of the propylene-based polymer (P), 100 parts by weight of the total weight of the polymer components, or 100 parts by weight of the propylene resin composition is usually more than 0 parts by weight and 40 parts by weight or less, preferably 1 part by weight or more and 40 parts by weight or less, preferably 5 parts by weight or more and 35 parts by weight or less, and more preferably 5 parts by weight or more and 30 parts by weight or less. The above "more than 0 parts by weight" may be replaced with "0 parts by weight or more".

When the polypropylene resin composition of the present invention contains an antioxidant, a content ratio of the antioxidant to 100 parts by weight of the propylene-based polymer (P) or 100 parts by weight of the total weight of the polymer components is preferably more than 0 parts by weight and 5 parts by weight, preferably 0.001 parts by weight to 5 parts by weight, more preferably 0.01 parts by weight to 3 parts by weight, still more preferably 0.05 parts by weight to 2 parts by weight, and further still more preferably 0.1 parts by weight to 1 part by weight. The above "more than 0 parts by weight" may be replaced with "0 parts by weight or more". In order to improve rigidity, impact resistance, heat aging resistance, or water resistance, and/or in order to further increase tensile strain at break, the content of the antioxidant is preferably the lower limit value or more. In addition, in order to improve an appearance of a molded article, such as hue or gloss, the content of the antioxidant is preferably the above upper limit value or less. On the other hand, in order to reduce a mold contamination potential, a content ratio of the antioxidant may be 0 parts by weight to 0.05 parts by weight, 0 parts by weight to 0.01 parts by weight, 0 parts by weight to 0.005 parts by weight, or 0 parts by weight (that is, not contained). For example, the mold contamination potential is measured according to a method described in Examples. For example, the water resistance is measured according to a method described in Examples.

### Method for manufacturing propylene resin composition

The propylene resin composition of the present embodiment can be manufactured by melt-kneading the components described above. A temperature during melt kneading may be 180°C or higher, 180°C to 300°C, or 180°C to 250°C.

Examples of a melt-kneading apparatus in the melt-kneading for the manufacture of the propylene resin composition of the present embodiment include any suitable conventionally known Banbury mixer, uniaxial extruder, twin-screw co-rotating extruder, and twin-screw counterrotating extruder.

Specific examples of the melt-kneading apparatus include ZSK (registered trademark) manufactured by Coperion, TEM (registered trademark) manufactured by Shibaura Machinery Co., Ltd., TEX (registered trademark) manufactured by The Japan Steel Works, Ltd., KZW (registered trademark) manufactured by TECHNOVEL CORPORATION, CMP (registered trademark) and TEX (registered trademark) manufactured by The Japan Steel Works, Ltd., and FCM (registered trademark), NCM (registered trademark), and LCM (registered trademark) manufactured by The Kobe Steel Works, Ltd.

The order of kneading the raw materials is not particularly limited. For example, all the raw materials may be collectively put into a manufacturing apparatus and kneaded, or some of the selected components may be kneaded, and then the obtained kneaded product and the other components may be kneaded.

The properties of the propylene resin composition of the present embodiment are not particularly limited. The propylene resin composition of the present embodiment can have, for example, a strand (filament) shape, a sheet shape, a flat plate shape, or a pellet shape. The pellet shape can be manufactured, for example, by preparing a strand-shaped propylene resin composition and then cutting the strand-shaped propylene resin composition into an appropriate length.

### Molded article

The present invention also relates to a molded article obtained by molding a propylene resin composition. That is, the propylene resin composition of the present embodiment can be suitably used as a material for forming a molded article. The molded article can be obtained by molding the propylene resin composition by various molding methods. The shape, size, and the like of the molded article only need to be appropriately determined.

The propylene resin composition of the present embodiment can be used as a material of a molded article such as an automobile material, a household electric appliance material, a material for a monitor, an OA device material, a medical material, a drain pan, a toiletry material, a food packaging container, a bottle, a container, a sheet, or a film. Since the propylene resin composition of the present embodiment is less likely to be charged and can suppress adhesion of, for example, dust, the propylene resin composition can be preferably applied to a material for a vehicle-related member, a household electric appliance material, and a food packaging container such as a retort pouch or a pouch that can be heated by a microwave oven.

The propylene resin composition of the present embodiment is particularly preferably used as a material for injection molding.

Hereinafter, an example of an injection molded article manufactured using the propylene resin composition of the present embodiment as a material for injection molding will be described.

The injection molded article is a molded article obtained by molding the propylene resin composition of the present embodiment. The injection molded article is generally excellent in dimensional stability.

The injection molded article can be manufactured by any suitable conventionally known injection molding method. Examples of the injection molding method include an injection foam molding method, a supercritical injection foam molding method, an ultrahigh-speed injection molding method, an injection compression molding method, a gasassisted injection molding method, a sandwich molding method, a sandwich foam molding method, and an insert outsert molding method.

The molded article (such as an injection molded article) of the present embodiment can be manufactured by the above method so as to have any suitable shape and dimension corresponding to an application.

Here, examples of an application of the material for a vehicle-related member which is an injection molded article include an interior part such as a door trim, a pillar, an instrumental panel, a console, a rocker panel, an armrest, a door panel, or a spare tire cover, an exterior part such as a bumper, a spoiler, a fender, or a side step, a part such as an air intake duct, a coolant reservoir tank, a fender liner, a fan, or an under deflector, and an integrally molded part such as a front/end panel.

Examples of the household electric appliance material include a material for a washing machine (an outer tank, an inner tank, a lid, a pulsator, a balancer, or the like), a material for a dryer, a material for a vacuum cleaner, a material for a rice cooker, a material for a pot, a material for a heat incubator, a material for a dishwasher, and a material for an air cleaner.

### EXAMPLES

Hereinafter, the present invention will be further specifically described with reference to Examples. Note that the present invention is not limited to Examples.

In Examples and Comparative Examples, the following raw materials were used.

### Component P: propylene-based polymer

The following propylene-based polymer P1 was prepared as the component P.

### (P1) Heterophasic propylene polymer material

A heterophasic propylene polymer material was manufactured by a gas phase polymerization method in the presence of a polymerization catalyst obtained by a method described in Example 1 of JP-A-2004-182981. The physical properties of the obtained component P1 are as follows.

### Melt flow rate (MFR) (230°C, 2.16 kg load): 27.5 g/10 min

(a) Propylene homopolymer component (polymer I) Intrinsic viscosity: 1.06 dL/g
(b) Propylene-ethylene random copolymer component (polymer II) Intrinsic viscosity: 2.8 dL/g
   Ratio of propylene-ethylene random copolymer component: 21.0% by weight
   Content ratio of ethylene in polymer II: 39.0% by weight

In the component P1, a "content ratio of ethylene in the polymer II" refers to a content ratio of a monomer unit derived from ethylene based on the total weight of the polymer II.

### Content ratio of ethylene in polymer II

A content ratio of ethylene in the polymer II was determined from a 13C-NMR spectrum measured under the following conditions on the basis of a report by Kakugo et al. (Macromolecules, 15, 1150-1152 (1982)). The 13C-NMR spectrum was measured under the following conditions using a sample obtained by uniformly dissolving about 200 mg of a heterophasic propylene polymerization material in 3 mL orthodichlorobenzene in a test tube having a diameter of 10 mm.
Measurement temperature: 135°C
Pulse repeating time: 10 seconds
Pulse width: 45°
Number of integrations: 2500

### Intrinsic viscosity (unit: dL/g)

An intrinsic viscosity is a value measured at a temperature of 135°C using tetralin as a solvent by the following method.

A reduced viscosity is measured at each of three points of concentrations of 0.1 g/dL, 0.2 g/dL, and 0.5 g/dL using an Ubbelohde viscometer. The intrinsic viscosity is determined by an extrapolation method in which the reduced viscosity is plotted with respect to the concentration and the concentration is extrapolated to zero. A method for calculating the intrinsic viscosity by the extrapolation method is described, for example, on page 491 of "Polymer solution, Polymer Experiment 11" (published by KYORITSU SHUPPAN CO., LTD., 1982).

### Component D: metal deactivator

The following metal deactivator was prepared as the component D.
(D1) ADK STAB CDA-1M manufactured by ADEKA CORPORATION: 3-(N-salicyloyl) amino-1,2,4-triazole
(D2) ADK STAB CDA-1 manufactured by ADEKA CORPORATION: 2-hydroxy-N-1H-1,2,4-triazol-3-ylbenzamide
(D3) ADK STAB ZS-19 manufactured by ADEKA CORPORATION: a composite of a melamine resin ((1,3,5-triazine-2,4,6-triamine) H₂C=O (formaldehyde)), a phenol compound, and an organic compound

### Component H: hindered amine-based light stabilizer

The following hindered amine-based light stabilizers were prepared as the component H.
(H1) Uvinul5050H manufactured by BASF Japan Ltd.
(H2) ADK STAB LA-52 manufactured by ADEKA Corporation: tetrakis(1,2,2,6,6-pentamethyl-4-piperidyl)=1,2,3,4-butanetetracarboxylate
(H3) SABOSTAB UV 119 manufactured by SABO S.p.A.: the following mixture:
   N,N',N",N‴-tetrakis(4,6-bis(butyl-(N-methyl-2,2,6,6-tetramethylpiperidin-4-yl)amino)triazin-2-yl)-4,7-diazadecane-1,10-diamine
   Dimethyl succinate•1-(2-hydroxyethyl)-4-hydroxy-2,2,6,6-tetramethylpiperidine polycondensate

### Component A: Other additives

The following components were prepared as the component A which is any other suitable component.
(A1) Irganox1010 manufactured by BASF Japan Ltd.
(A2) Irgfos168 manufactured by BASF Japan Ltd.

### Examples 1 to 8 and Comparative Examples 1 to 5

### Manufacture of propylene resin composition

The raw materials having the compositions in Tables 1 and 2 were uniformly premixed with a Henschel mixer or a tumbler, and then melt-kneaded using a twin-screw kneading extruder (TEX 44αII-49BW-3V type manufactured by The Japan Steel Works, Ltd.) to obtain a pellet-shaped propylene resin composition.

**[Table 1]**

| Contents | Unit | Example 1 | Example 2 | Example 3 | Example 4 | Example 5 | Example 6 | Example 7 | Comparative Example 1 | Comparative Example 2 | Comparative Example 3 | Comparative Example 4 |
|---|---|---|---|---|---|---|---|---|---|---|---|---|
| Component P: propylene-based polymer | % by weight | 100 | 100 | 100 | 100 | 100 | 100 | 100 | 100 | 100 | 100 | 100 |
| Component D1: ADK STAB CDA-1M | ppm by weight | 100 | 100 | 300 | | | 100 | 100 | 500 | 2000 | 100 | 0 |
| Component D2: ADK STAB CDA-1 | ppm by weight | | | | 100 | | | | | | | |
| Component D3: ADK STAB ZS-19 | ppm by weight | | | | | 100 | | | | | | |
| Component H1: Uvinul5050H | ppm by weight | 2000 | 2000 | 4000 | 2000 | 2000 | | | 3000 | 500 | 0 | 2000 |
| Component H2: ADK STAB LA-52 | ppm by weight | | | | | | 2000 | | | | | |
| Component H3: SABOSTAB UV 119 | ppm by weight | | | | | | | 2000 | | | | |
| Component A1: Irganox1010 | ppm by weight | - | 500 | - | - | - | - | - | - | - | - | - |
| Component A2: Irgfos168 | ppm by weight | - | 500 | - | - | - | - | - | - | - | - | - |
| Ratio of weight of component H to weight of component D | - | 20 | 20 | 13 | 20 | 20 | 20 | 20 | 6 | 0.25 | 0 | - |
| Tensile strain at break | % | 434 | 855 | 514 | 825 | 718 | 911 | 751 | 403 | 203 | 66 | 273 |
| Mold contamination potential | mm² | 84 | 195 | 177 | 197 | 197 | 275 | 239 | 245 | 361 | 109 | 97 |
| Color difference before and after water resistance test (ΔE*ab) | - | 5.6 | 3.8 | 5.2 | 5.2 | 5.1 | 5.4 | 5.4 | 6.3 | 6.0 | 5.3 | 5.1 |

**[Table 2]**

| Contents | Unit | Example 8 | Comparative Example 5 |
|---|---|---|---|
| Component P: propylene-based polymer (component P1) | % by weight | 100 | 100 |
| Component D: ADK STAB CDA-1M (component D1) | ppm by weight | 400 | 500 |
| Component H: Uvinul5050H (component H1) | ppm by weight | 4000 | 3750 |
| Ratio of weight of component H to weight of component D | - | 10.0 | 7.5 |
| Tensile strain at break | % | 504 | 103 |
| Mold contamination potential | mm² | 133 | 162 |

Conditions for melt-kneading were as follows: cylinder temperature: 210°C; screw rotation speed: 200 rpm; three screen meshes of 40 mesh, 80 mesh, and 40 mesh were stacked, and an extrusion amount was 50 kg/hr. Evaluation results are presented in Tables 1 and 2.

### Manufacture of injection molded article for evaluation of tensile strain at break

A pellet-shaped propylene resin composition was injection-molded under the following conditions within a range described in JIS K7152 to manufacture an injection molded article for evaluation of tensile strain at break. The propylene resin composition melted by an injection molding machine was supplied from a gate into a die cavity by the injection molding machine. Measurement results are presented in Tables 1 and 2.
Injection molding machine: Toyo Machinery & Metal Si30III
(Die clamping force: 30 tons, cylinder diameter: 18 mm)
Cylinder temperature: 200°C
Die temperature: 50°C
Injection speed: 20 mm/sec
Cooling time: 30 seconds

### Evaluation of Mold contamination potential (mold contaminating area)

The pellet-shaped propylene resin composition was dried at 100°C for one hour, and then continuously subjected to 60 shot injection molding under the following conditions, and a molded article was taken out. Thereafter, a transparent heat-resistant polyester film was attached to the inside of the die, the die was clamped and held for five seconds, and then the film was taken out. The area (unit: mm²) of a mold contamination transferred to the film was measured with an image analyzer. The smaller the area of the mold contamination was, the smaller the Mold contamination potential was.
Injection molding machine: Toyo Machinery & Metal Si30III
(Die clamping force: 30 tons, cylinder diameter: 18 mm)
Cylinder temperature: 260°C
Die temperature: 50°C
Injection speed: 40 mm/sec
Cooling time: 10 seconds

### Evaluation of color difference before and after water resistance test

The pellet-shaped propylene resin composition was dried at 100°C for one hour and then injection-molded under the following conditions to manufacture a flat plate-shaped molded article having a length of 80 mm, a width of 35 mm, and a thickness of 2.0 mm.
Injection molding machine: Toyo Machinery & Metal Si30III
(Die clamping force: 30 tons, cylinder diameter: 18 mm)
Cylinder temperature: 220°C
Die temperature: 50°C
Injection speed: 20 mm/sec
Cooling time: 30 seconds

One obtained flat plate-shaped molded article was put in a 0.5 L volume glass bottle. Subsequently, water was added thereto, and a lid was closed and the glass bottle was sealed. The molded article was immersed and fixed in a thermostatic water bath adjusted to 60°C, and allowed to stand for 1000 hours.

Then, the glass bottle was taken out from the thermostatic water bath. Thereafter, the flat plate-shaped molded article was taken out and water on a surface of the molded article was wiped off.

A central area of the surface of the flat plate-shaped molded article was measured using a color difference meter (BYK-mac manufactured by BYK) at a measurement area of Φ23 mm, an illumination of 45 degrees, and a measurement angle of 45 degrees. A value after the water resistance test was measured based on a value before the water resistance test, and a color difference ΔE*ab was determined.

Tables 1 and 2 indicate that the molded articles according to Examples have large tensile strain at breaks. That is, it was confirmed that with the propylene resin composition of the present invention, a molded article having a large tensile strain at break can be manufactured, and the molded article of the present invention has a large tensile strain at break.

## Claims

1. A propylene resin composition comprising a propylene-based polymer, a metal deactivator, and a hindered amine-based light stabilizer, wherein
a ratio of a weight of the hindered amine-based light stabilizer to a weight of the metal deactivator is 10 or more.

2. The propylene resin composition according to claim 1, wherein the ratio of the weight of the hindered amine-based light stabilizer to the weight of the metal deactivator is 50 or less.

3. The propylene resin composition according to claim 1, wherein the propylene-based polymer contains a heterophasic propylene polymer material.

4. The propylene resin composition according to claim 1, wherein a weight ratio of the metal deactivator is 10 ppm by weight to 1000 ppm by weight with respect to 100 parts by weight of a total weight of the propylene resin composition.

5. The propylene resin composition according to claim 1, wherein a weight ratio of the hindered amine-based light stabilizer is 200 ppm by weight to 10000 ppm by weight with respect to 100 parts by weight of a total weight of the propylene resin composition.

6. The propylene resin composition according to claim 1, wherein a weight ratio of the propylene-based polymer is 50 parts by weight or more with respect to 100 parts by weight of a total weight of the propylene resin composition.

7. The propylene resin composition according to claim 1, wherein a melt flow rate (measured under conditions of a temperature of 230°C and a load of 2.16 kgf) of the propylene resin composition is 0.1 g/10 min or more.

8. The propylene resin composition according to claim 1, wherein a melt flow rate (measured under conditions of a temperature of 230°C and a load of 2.16 kgf) of the propylene-based polymer is 0.1 g/10 min or more.

9. The propylene resin composition according to claim 1, further comprising an ethylene-α-olefin copolymer.

10. The propylene resin composition according to claim 9, wherein a weight ratio of the ethylene-α-olefin copolymer is 1 part by weight to 40 parts by weight with respect to 100 parts by weight of a total weight of the propylene resin composition.

11. The propylene resin composition according to claim 1, further comprising an inorganic filler.

12. The propylene resin composition according to claim 11, wherein a weight ratio of the inorganic filler is 1 part by weight to 40 parts by weight with respect to 100 parts by weight of a total weight of the propylene resin composition.

13. The propylene resin composition according to claim 1, further comprising an ethylene-α-olefin copolymer and an inorganic filler.

14. A molded article comprising the propylene resin composition according to any one of claims 1 to 13.
